# EUROPEAN PATENT APPLICATION

(11) **EP 4 826 417 A2**
(43) Date of publication of application: **21.10.2026**
(21) Application number: 26197390.3
(22) Date of filing: 02.02.2023
(51) Int. Cl.: G01T 1/24

(54) **METHOD AND DEVICE FOR CONTROLLING SENSITIVITY OF A SPAD MACRO-CELL**

(30) Priority: 22.04.2022 DE 102022109747
(62) Document number(s) of the earlier application(s) in accordance with Art. 76 EPC: 23703190.1 / 4 511 677
(71) Applicant: AMS-OSRAM AG, 8141 Premstätten (AT)
(72) Inventor: LINDNER, Scott, 8032 Zurich (CH); BOEHM, Michael, 8020 Graz (AT); TALOUD, Pierre-Yve, 74940 Annecy le Vieux (FR)
(74) Representative: Ding, Yuan

(57) **Abstract**

A SPAD macro-cell comprises an array of SPAD unit, each of which comprises a SPAD (S0, S1...S15) and a quenching circuit (Q0, Q1...Q15) for the SPAD (S0, S1...S15), a combination tree to combine output signals from the SPAD units and a time-to-digital converter (TDC) operably connected to an output of the combination tree. The SPAD macro-cell is divided to a plurality of sub-cells. The SPAD macro-cell further comprises a control circuit (40) configured to enable at least one or some SPAD units in each sub-cell in a time period and enable another one or some other SPAD units in each sub-cell in the next time period.

## Description

The present invention relates to the field of single-photo avalanche diode (SPAD) detectors and, more particularly, to a method and device for controlling sensitivity of a SPAD macro-cell.

### BACKGROUND OF THE INVENTION

A time-of-flight (ToF) camera employing time-of-flight techniques to determine depth information. ToF cameras are categorized into direct time-of-flight (dToF) cameras and indirect time-of-flight (iToF) cameras. DToF cameras are based on the technology of time-correlated single-photon counting (TCSPC). Photons are emitted from a laser onto a target scene, and some of them that hit a target in the scene return to the dToF camera. The SPADs comprised in the dToF camera can be arranged in subgroups which are also called macro-cells, each of which is connected to a single data conversion circuit, e.g. a time-to-digital converter (TDC). A TDC detects any signal events in the subgroup or macro-cell connected to it and provides a digital representation of the time they occurred.

The time-of-flight of each returning photon is measured and subsequently stored in a histogram. To achieve an accurate measurement of the distance between the camera and each point of the target, the returning optical pulse stored in the camera histogram should accurately resemble the pulses emitted from the laser. A common problem in TCSPC is that, when the average received signal event rate reaches 10-20% of the laser pulse repetition frequency, the recorded optical pulse becomes distorted due to the dead time, which is the time until next possible detection of SPADs or TDC. This situation occurs at short range, where the laser pulse returned to the camera is strong and the accuracy requirements of the sensing system is high. This distortion can happen at both the SPAD and TDC level but is particularly problematic at the TDC level since the signal events from multiple SPADs are transmitted to a single TDC. The use of structured illumination, e.g. dots, makes this problem more severe as the intensity of the signal per TDC is even higher.

A conventional solution is, correcting the distortion in post-processing using correction algorithms to recover the shape of the emitted pulse. However, such correction algorithms have limitations that severe distortions cannot be corrected. This limits the use of such algorithms in certain situations, e.g. short-range applications.

Another prior solution is disclosed in US9786701B2. The SPAD array is divided into several SPAD sets, each of which have a different sensitivity due to being covered by shields. Sensitivity of the SPAD array is adjusted according to different application requirements to avoid signal distortion. The method of controlling sensitivity of the SPAD array disclosed in US9786701B2 comprises first measuring signal rate and then selectively enabling a set of SPADs in a macro-cell. However, in this way, the probability that the target can be covered by the SPAD array decreases.

### SUMMARY OF THE INVENTION

The objective of the present invention is to provide a method and device for controlling sensitivity of SPAD macro-cells. The spatial coverage over the entire target scene is maintained.

In accordance with the present invention, there is provided a single-photon avalanche diode (SPAD) macro-cell, comprising an array of SPAD units, each of which comprises a SPAD (S0, S1...S15) and a quenching circuit (Q0, Q1...Q15) for the SPAD (S0, S1...S15), a combination tree to combine output signals from the SPAD units, and a time-to-digital converter TDC operably connected to an output of the combination tree. The SPAD macro-cell is divided to a plurality of sub-cells, the SPAD macro-cell further comprises a control circuit 40 configured to enable at least one or some SPAD units in each sub-cell in a time period and enable another one or some other SPAD units in each sub-cell in the next time period. In addition, each SPAD unit further comprises a buffer (B0, B1...B15) operably connected to an output of the SPAD and the control circuit 40 is configured to enable the SPAD unit by enabling the buffer comprised in the SPAD unit.

Advantageously, the control circuit 40 is configured to enable each SPAD unit at least once after at least two time period. It is also possible that the control circuit is configured to enable some SPAD units more frequently than other SPAD units.

Advantageously, the control circuit 40 comprises a register 41 to store a string of binary bits, each of which represents a starting status of a SPAD, and a barrel shifter 42 to perform a logical shift operation on the string of binary bits and control the buffer B0, B1...B15 based on the shift operation.

Advantageously, the control circuit further comprises a counter 43 operably connected to the barrel shifter 42 to control the shift operation.

Advantageously, the counter 43 is driven by a reference clock which is the same as a laser pulse period.

Advantageously, the control circuit 40 comprises a shift register with the same number of flip-flops as SPADs, the output of which is looped to the input which is initialized with the starting pattern and then clocked every period.

Advantageously, the combination tree is a OR tree or XOR tree. It could also be other trees with similar function.

Advantageously, the time period is a laser pulse period.

The present disclosure describes also a SPAD detector comprises at least one above SPAD macro-cell.

In further embodiments, the SPAD detector comprises a first above SPAD macro-cell and a second above SPAD macro-cell. In some embodiments, SPADs in the first SPAD macro-cell present a first enable pattern at a time period, and SPADs in the second SPAD macro-cell present a second enable pattern which is different from the first enable pattern at the same time period.

It is also an aim of the present invention to provide a method for controlling sensitivity of a SPAD macro-cell comprising an array of SPAD units, wherein the SPAD macro-cell is divided to a plurality sub-cells, a combination tree to combine output signals from the SPAD units; and a time-to-digital converter (TDC) operably connected to an output of the combination tree; the method comprises enabling at least one or some SPAD units in each sub-cell at a time period, and enabling another one or some other SPAD units in each sub-cell in the next time period. In addition, the method comprises enabling a SPAD unit by turning on a buffer operably connected to the SPAD.

Advantageously, the method comprises storing in a register a string of binary bits, each of which represents a starting enable status of a SPAD and performing a logical shift operation on the string of binary bits and control the buffers based on the shift operation through a barrel shifter.

Advantageously, the method comprises controlling the shift operation by a counter.

Advantageously, the counter is driven by a reference clock which is the same as reference clock of TDC.

Advantageously, the method comprises determining the number of SPAD units to be enabled by two steps: varying a real ambient event rate, Rra, at a detector and recording a measured ambient event rate, Rma, a pile-up factor Fpa due to the ambient illumination is then decided by Fpa = Rma/Rra; and calculating a real signal rate Rrs according to a measured signal rate Rms and the Pile-up factor Fpa.

Advantageously, the method comprises comparing the real signal rate Rrs and a set limit to decide whether the number SPAD units enabled in a laser pulse cycle is optimal.

### BRIEF DESCRIPTION OF THE DRAWINGS

Further benefits and advantages of the present invention will become apparent after a careful reading of the detailed description with appropriate reference to the accompanying drawings.

In the figures:
- Figure 1: illustrates a schematic diagram of a 4 × 4 SPAD array of a conventional SPAD macro-cell, (a) all 16 SPADs of the macro-cell are enabled, (b) 8 SPADs of the macro-cell are enabled, (c) 4 SPADs of the macro-cell are enabled, (d) 1 SPAD of the macro-cell is enabled,
- Figure 2: illustrates a schematic diagram of a SPAD macro-cell with 8 SPADs dynamically enabled according to a preferred embodiment of the present invention, (a) the first time period, (b) the second time period,
- Figure 3: illustrates a schematic diagram of a SPAD macro-cell with 4 SPADs dynamically enabled according to another preferred embodiment of the present invention, (a) the first time period, (b) the second time period, (c) the third time period, (d) the fourth time period,
- Figure 4: illustrates a block diagram of a SPAD macro-cell of a ToF detector according to a preferred embodiment of the present invention,
- Figure 5: illustrates an example photon transfer curve (PTC) for a SPAD illuminated by ambient light, and
- Figure 6: illustrates a flowchart of a method for controlling sensitivity of a SPAD macro-cell according to a preferred embodiment of the present invention.

### DETAILED DESCRIPTION

Various embodiments of the disclosed methods and arrangements are discussed in detail below. While specific implementations are discussed, it should be understood that this is done for illustration purposes only. A person skilled in the relevant art will recognize that other components, configurations, and steps may be used without parting from the spirit and scope of the disclosure.

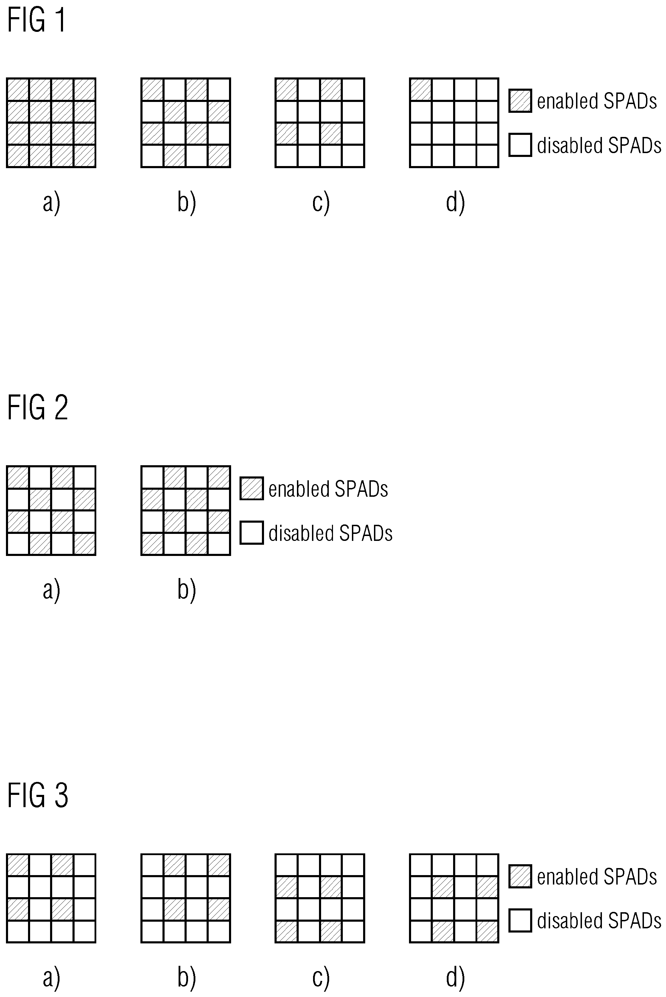

Fig. 1 illustrates a conventional SPAD macro-cell, which comprises 16 SPADs arranged in a 4 × 4 array. Fig. 1 (a) to (d) shows 16 SPADs, 8 SPADs, 4 SPADs and 1 SPAD are enabled, respectively. The SPAD macro-cell is connected to a single TDC which receives signal events transmitted from the enabled SPADs of the macro-cell. In Fig. 1 (a), the SPAD macro-cell works in a normal mode that all 16 SPAD pixels of the macro-cell are enabled. In Fig 1 (b), only half of the SPAD pixels in the macro-cell are enabled, so not all photons arrive at the SPAD macro-cell can be counted. Thus, the sensitivity of the SPAD macro-cell decreases. With equal signal intensity on every SPAD, the signal intensity at the TDC is reduced by 2. Therefore, as the sensitivity of the SPAD macro-cell decreases, the signal intensity at the TDC reduces, which helps to reduce signal distortion. In the Fig. 1 (c) and Fig. 1 (d), the photons arrive at the 4 enabled SPADs and 1 enabled SPAD can be counted, respectively. Therefore, the sparser the enable pattern, the lower the sensitivity of the SPAD macro-cell. However, such partially enabled patterns bring a new problem that the signal intensity is in some way proportional to spatial coverage. As such, as the enable pattern becomes sparser, the likelihood of a target being covered by the enabled SPADs decreases.

Fig. 2 illustrates a schematic diagram of a SPAD macro-cell with 8 SPADs dynamically enabled according to a preferred embodiment of the present invention. The SPAD macro-cell comprises 16 SPADs arranged in a 4 × 4 array, and can be further divided into 4 sub-cells, each of which comprises a 2 × 2 SPAD array. The SPADs are arranged in a close spatial proximity and are enabled in sequence from Fig. 2(a) to 2(b). In the first time period as shown in Fig. 2(a), 2 SPADs in each sub-cell are enabled. The enabled 2 SPADs are located at the (1,1) entry, and (2,2) entry of each 2 × 2 array. If we use "1" for an enabled SPAD, and "0" for a disabled SPAD, the SPAD enable pattern in this time period can be presented as "1001100110011001". In the second time period as shown in Fig. 2(b), there are still 2 SPADs enabled in each 2 × 2 array. However, the enabled 2 SPADs are changed to be the ones located at the (1,2) entry, and (2,1) entry of each 2 × 2 array. In the second time period, the SPAD enable pattern can be presented as "0110011001100110". In Fig. 2(a), half of the SPADs in the macro-cell are enabled, and in Fig. 2(b) the other half of the SPADs are enabled. It means that, after the first time period and the second time period, all SPADs are enabled once. So, if it continues like this, the likelihood of a target being covered by the SPAD macro-cell is maintained but with lower signal intensity than when the TDC is connected to all the SPADs enabled simultaneously in a macro-cell.

Fig. 3 shows another example of SPAD macro-cell according to the present invention. The SPAD macro-cell still comprises 16 SPADs arranged in a 4 × 4 array, and is further divided into 4 sub-cells, each of which comprises a 2 × 2 SPAD array. According to this example, only 1 SPAD from each sub-cell is enable in a given time period, so 4 SPADs of the macro-cell are enabled at a time. In the first time period shown in Fig. 3(a), the SPAD located at the (1,1) entry of each 2 × 2 SPAD array is enabled. In the second time period as shown in Fig. 3(b), the SPAD located at the (1,2) entry is enabled. And then, in the third and fourth time period as shown in Fig. 3(c) and Fig. 3(d), the SPAD located at the (2,1) entry and the SPAD located at the (2,2) entry are enabled, respectively. The four generated SPAD enable patterns are "1000100010001000", "0100010001000100", "0010001000100010" and "0001000100010001". Although, only 4 SPADs of the 16 SPADs are enabled at one time period, e.g. a laser pulse period, after 4 such time periods, e.g. 4 laser pulse periods, all the 16 SPADs are enabled once. Compared to the example shown in Fig. 2, a complete scene can be covered with even lower signal intensity and less SPAD macro-cell sensitivity.

As mentioned above, in the short-range detection, strong pulse intensity brings signal distortion which degrades accuracy. Our examples shown in Fig. 2 and 3 provide a solution to reduce signal intensity with dynamically enabled SPADs in a macro-cell. Meanwhile, compared to conventional solution shown in Fig. 1. The complete macro-cell is enabled after a certain time period, so our solution is not at the expense of detection capability.

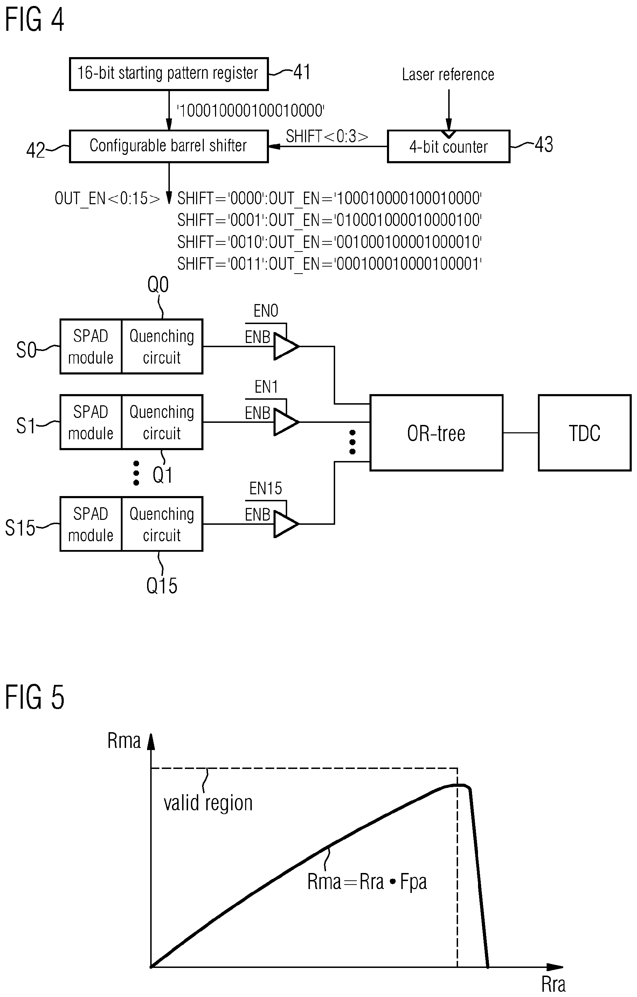

A preferred embodiment to realize the dynamic enabling is shown in Fig. 4, which illustrates a block diagram of a SPAD macro-cell of a TOF detector according to a preferred embodiment of the present invention. The SPAD macro-cell comprises 16 SPADs (S0, S1...to S15) sharing one time-to-digital converter (TDC). Each SPAD is connected to a quenching circuit (Q0, Q1... to Q15) to quench a single-event avalanche which is induced by photon or dark count and output a digital signal. Each quenching circuit is connected to a respective buffer (B0, B1... to B15) which can be enabled by an input enable signal. The input enable signal (EN0, EN1... EN15) is a logic "0" or logic "1" type signal, and the buffer output is "disabled" or "enabled", correspondingly. When a buffer is enabled, the signal output from the quenching circuit connected to this buffer can be further propagated. On the contrary, if a buffer is disabled, the signal propagation will be broken. At the other ends of the buffers, the output signals are combined with a combination tree, which could be an OR-tree, as illustrated in Fig. 4, but could also be a XOR-tree, or other trees with similar function. The output of the OR-tree then enters the TDC which generates a digital TDC output. The digital TDC output is corresponding to the time difference between the rising edge of a reference clock and the time-of-arrival (ToA) of the signal-event.

The sensitivity of the SPAD macro-cell is represented by the number of signal-events present at the input of the TDC, which is determined by the number of SPADs connected to the enabled buffers. Therefore, the sensitivity of the SPAD macro-cell can be controlled by setting the number of buffers enabled by EN='1'.

The enable signals (EN0, EN1...EN15) are output from a controlling circuit 40 of the SPAD macro-cell as illustrated in Fig. 4. The controlling circuit 40 comprises a starting pattern register 41 to store a starting pattern. For the SPAD macro-cell comprising 16 SPADs as shown in Fig. 3, the register 41 is a 16-bit register to store a 16-bit starting pattern, e.g. 1000100010001000. This starting pattern determines the number of buffers enabled at any given time, and also which SPAD enable patterns are possible. In the given example, 4 buffers can be enabled and 4 different enable patterns (1000100010001000, 0100010001000100, 0010001000100010, and 0001000100010001) are possible. The controlling circuit 40 also comprises a configurable barrel shifter 42 which performs a logical shift operation on the starting pattern to realize other possible enable patterns and provides the enable patterns to the buffers as enable signals. The number of bits to shift is determined by a counter 43 connected to the configurable barrel shifter 42. A 16 bits starting pattern stored in the 16-bit register can be shifted up 15 bits and that can be realized by a 4-bit counter. According to the given example, the 4-bit counter 43 outputs a shift control signal SHIFT <0:3>, which controls the configurable barrel shifter 42 to operate shifts of 0, 1, 2, and 3 bits. Thus, 4 different enable patterns are successively realized, which are "1000100010001000" corresponding to SHIFT="0000", "0100010001000100" corresponding to SHIFT="0001", "0010001000100010" corresponding to SHIFT="0010" and "00010001000100001" corresponding to SHIFT="0011". As shown in Fig. 4, The counter 43 is driven by a reference clock, which can be the same reference clock as the TDC, such that on each period of the laser pulse, a different enable pattern is realized.

In the first laser pulse period, according to the enable pattern of "1000100010001000", buffer 0, buffer 4, buffer 8, and buffer 12 are enabled. Therefore, SPAD 0, SPAD 4, SPAD 8 and SPAD 12 can propagate events to the TDC. Next, in the second laser pulse period, the enable pattern of "0100010001000100" enables SPAD 1, SPAD 5, SPAD 9 and SPAD 13. In the third laser pulse period, the enable pattern of "0010001000100010" enables SPAD 2, SPAD 6, SPAD 10 and SPAD 14. And in the fourth laser pulse period, the enable pattern of "0001000100010001" enables SPAD 3, SPAD 7, SPAD 11 and SPAD 15. In the next four laser pulse periods, the four enable patterns are repeated in sequence. The enabling process continues following this rule. Thus, although the SPAD enable pattern is a sparse pattern at each laser pulse period, a target in a scene can be covered by the complete SPAD macro-cell through time accumulation.

It is known from the above that, the sensitivity of the SPAD macro-cell is decided by the number of SPADs enabled at a laser pulse period. Therefore, the sensitivity of the SPAD macro-cell can be controlled by setting such number. The optimal number of SPADs to be enabled at a laser pulse period is determined to avoid signal distortion and ensure the accuracy of detection.

A common problem in TCSPC is that when the average received signal event rate reaches a certain percentage of the laser repetition frequency, e.g. 10-20%, the measured signal shape becomes distorted and the distance reconstruction loses accuracy. It is also known as pile-up effect, which describes the effects of photons lost at high photon count rates due to the dead time of the TCSPC devices. This 10-20% pile-up limit is taken from the TCSPC Handbook by Becker & Hickl GmbH. This limit is cited for calculating the fluorescence lifetime of a fluorophore in fluorescence lifetime microscopy. However, it also applies for dToF, but the limit may change slightly depending on the implementation and application. The optimal number of SPADs of a macro-cell to be enabled in each laser pulse period can be decided according to such a limit, e.g. 10%. If the signal event rate at the TDC is slightly less than e.g. 10% of the laser repetition frequency, then the number of SPADs enabled in a laser pulse period is optimal.

The signal event rate can be obtained by measuring the number of laser pulse periods required for the highest bin in the histogram, which is the peak of the laser pulse, to reach a given signal level. In the real environment, especially in the case of high ambient light brightness, the real signal event rate Rrs is attenuated by the ambient event rate resulting in a measured signal rate, Rms. Therefore, to calculate an estimate of the real signal event rate Rrs, the measured signal event rate Rms should be corrected by a pile-up factor Fpa, which is a count attenuation factor due to high ambient event rates and is equal for every bin in the histogram. The pile-up factor Fpa can be determined through ambient illumination detection. It requires the event activity at the TDC when the laser is turned off and the SPAD macro-cell only detects light intensity from ambient illumination. The real ambient event rate Rra can be calculated by the formula: Rma=Rra*Fpa, where Rma is the measured ambient event rate. Fpa is related to Rma through the photon transfer curve (PTC), an example of which is shown in Figure 5. The PTC can be obtained for a given configuration by varying the real ambient event rate, Rra, at a detector and recording the measured ambient event rate, Rma. The pile-up factor due to the ambient illumination is then Fpa = Rma/Rra. Such a measurement could be performed in a calibration step, calculating the Fpa which corresponds to Rma and then storing that value in a lookup table (LUT) for use in operation. The PTC is valid for a given dynamic enabling configuration, e.g. the PTC for 16/16 SPADs enabled will be different to the PTC with only 4/16 SPADs enabled due to the different contributions of pile-up from the SPAD and TDC. However, all configurations can be obtained from a single calibration measurement where 1/16 SPADs is enabled. In this instance, Rma is only influenced by pile-up from the SPAD, if the dead-time of the SPAD is greater than the dead-time of the TDC. The PTC for all other configurations can then be calculated from the 1/16 result using prior knowledge of the TDC dead-time and an analytical model of the PTC such as equation (1) in "A Simulation Model for Digital Silicon Photomultipliers", IEEE Transactions on Nuclear Science, Gnecchi et al., 2016*.* As such, from this single calibration measurement with the 1/16 configuration, we can make a lookup table LUT1 with values of Fpa and Rra corresponding to values of Rma for the different dynamic enabling configurations. The details on calculation of the real signal rate Rrs is described below.

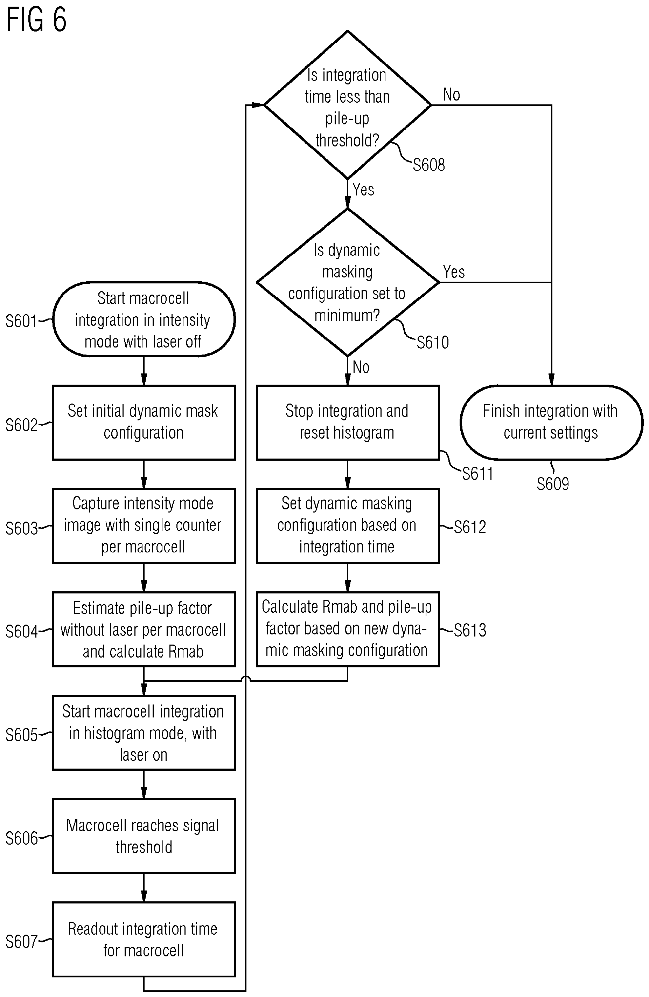

Fig. 6 illustrates a flowchart of an example method of controlling sensitivity of a SPAD macro-cell. The method controls the sensitivity by setting the optimal number of SPADs enabled in a laser pulse cycle. It starts with the calculation of pile-up factor Fpa and storage of the ambient event rate per histogram bin, Rmab = Rma/Nbins, where Nbins is the total number of bins in the full range of the TDC in a laser pulse period. In the step S1, the SPAD detector is set ready to detect ambient light. So, laser emission is turned off and the SPAD detector is set in the intensity mode. In the step S2, the SPAD macro-cell is set in initial configuration status with initial SPAD enable pattern. In the next step S3, the intensity model image is captured with one single counter per macro-cell. Then, in step S4, Rmab is calculated and stored and the pile-up factor Fpa per macro-cell is determined. So far, the ambient event rate per histogram bin, Rmab, and the pile up factor due to ambient, Fpa, are known. Now, we can determine whether the rate of the combined signal and ambient, which is the measured signal rate, exceeds a given threshold above which we encounter signal distortion. In step S5, the laser is turned on, and the SPAD detector is set in the histogram mode to record signal events corresponding to flight time. In the S6, the macro-cell reaches a known signal threshold Nth, and the integration time Tint, which is related to the measured signal event rate can be readout in the next step S7. From Nth, Fpa and Ramb, we calculate an integration time threshold when the above-mentioned limit is set to 10%, Tth to make a comparison with Tint in step S8: $Tth = \frac{Nth}{\left(Rmab+Flaser⋅Fpa⋅0.1⋅Sspread\right)}$ where Flaser is the repetition rate of the laser and Sspread is the proportion of the total signal expected to be in the highest signal bin and will depend on the actual implementation. If Tint > Tth, the real signal rate is less than 10% of the laser repetition rate, the current setting is satisfactory, and the integration continues till the end with the current setting in the step 9. However, if Tint < Tth, the real signal rate is more than 10% of the laser frequency and signal distortion will happen. So, in the step S11, the current macro-cell integration in histogram mode is stopped and histogram is reset. In the next step S12, setting of the dynamic enabling of the macro-cell should be changed according to the following equation $Nspads , on = \frac{Tint ⋅ Nspads}{Tth}$ where Nspads is the total number of SPADs available in the macro-cell and Nspads,on is the number of SPADs required to reach 10% signal rate. In practice, this will be a non-integer value, which should be rounded down to the nearest value compatible with the available dynamic enabling configurations. In the next step S13, we calculate a new value for Rra based on the new dynamic enabling configuration and lookup the corresponding values of Fpa and Rma, and compute Rmab. We can then start the process again from S5.

It is important to note that as the signal rate increases, the measured signal rate will deviate more from the real signal rate Rrs due to pile-up of the signal with itself, e.g. when the probability of a signal detection on any given laser pulse period is 50%, Rms will be ≈80% of Rrs. As such, in some instances the calculation of Nspads,on in step S12 may not result in a configuration with less than 10% signal rate in a single step. For this reason, the configuration of Nspads,on is performed in a loop. After S12, the sensor is configured with dynamic enabling configuration consistent with Nspads,on calculated previously and the process continues at S5 to confirm that the signal rate is less than 10%. This process will repeat until the signal rate is less than 10% with the current configuration and the integration finishes as in S9 or the sensor is already configured with the lowest dynamic enabling configuration, 1/16 SPADs enabled as in S10.

As the PTC under ambient conditions is non-monotonic at high values of Rma, the initial configuration of the dynamic enabling should be chosen such that the possible range of incident event rates is within the valid region depicted in Figure 5. This will depend on the actual sensor construction and operating conditions of the application.

In this example, the limit is set to 10%, however, it may be different according to implementation and application.

In an alternate scheme, a proper setting of the SPAD macro-cell could be done without any measurement of the scene but rather by using a prior knowledge of the system characteristics.

The present invention can be applied in many different situations.

The first situation is when the TDC range covers the entire distance range of interest. The entire range detection can be divided into short range detection and long-range detection. For a target in the long range, all SPADs are enabled. For the targets very close to the SPAD detector, the present invention can be used to mitigate pile-up distortion. Due to the high signal event rate, even if the laser emitting source is covered by a shield, only a short integration time is required to achieve a sufficient signal-to-noise (SNR) to make a reliable short distance measurement. As such, a separate short-range detection with a sparse enable pattern, e.g. 1/16 SPADs enabled per laser pulse cycle, is applied. Therefore, the SNR ratio of the system is maximized.

In the second situation, a full detection range comprises several sub-ranges, each of which is an independent detection range. Compared with the first situation, it requires more separate sub-range detections as the range increases. The sub-ranges can be fixed. Bur preferably, the sub-ranges are not fixed, and the start point of a sub-range will be shifted after the previous sub-range detection is done. In this way, the detection spans the entire range. The TDC and histogram are only applied for one of the sub-ranges at a time, where the sensor is vulnerable to pile-up. For other sub-ranges, TDC and histogram are not used. When the detection for this sub-range is done, the starting point of the next sub-range is determined, and an independent detection will be conducted.

In the third application, the full range of the system could be covered by two TDCs and histograms with a small time overlap region between them. The first TDC covers the region close to the camera which is most vulnerable to pile-up distortion and the second TDC covers the long-range region. In this situation, the TDC and histogram corresponding to the short-range region could take their inputs from quencher outputs which use the enable pattern to reduce the signal event rate. For the longer-range region, the corresponding TDC and histogram will take signal inputs from quencher outputs which bypasses the enable buffers. This scheme enables parallel detections in both short-and long-range regions with a reduced signal event rate for short range only.

Although the invention has been explained in relation to its preferred embodiment(s) as mentioned above, it is to be understood that many other possible modifications and variations can be made without departing from the scope of the present invention. It is, therefore, contemplated that the appended claim or claims will cover such modifications and variations that fall within the true scope of the invention.

## Claims

1. A SPAD macro-cell, comprising:
an array of SPAD unit, each of which comprises a SPAD (S0, S1...S15) and a quenching circuit (Q0, Q1...Q15) for the SPAD (S0, S1...S15);
a combination tree to combine output signals from the SPAD units; and
a time-to-digital converter (TDC) operably connected to an output of the combination tree;
**characterized in that**,
the SPAD macro-cell is divided to a plurality of sub-cells;
and the SPAD macro-cell further comprises
a control circuit (40) configured to enable at least one or some SPAD units in each sub-cell in a time period and enable another one or some other SPAD units in each sub-cell in the next time period;
wherein
each SPAD unit further comprises a buffer (B0, B1...B15) operably connected to an output of the SPAD;
the control circuit (40) is configured to enable the SPAD unit by enabling the buffer comprised in the SPAD unit.

2. The SPAD macro-cell according to claim 1, wherein
the control circuit (40) is configured to enable each SPAD unit at least once after at least two time period.

3. The SPAD macro-cell according to claim 1, wherein
the control circuit (40) comprises a register (41) to store a string of binary bits, each of which represents a starting status of a SPAD; and
a barrel shifter (42) to perform a logical shift operation on the string of binary bits and control the buffer (B0, B1...B15) based on the shift operation.

4. The SPAD macro-cell according to claim 3, wherein
the control circuit (40) further comprises a counter (43) operably connected to the barrel shifter (42) to control the shift operation.

5. The SPAD macro-cell according to claim 4, wherein
the counter (43) is driven by a reference clock which is the same as a laser pulse period.

6. The SPAD macro-cell according to claim 3, wherein
the control circuit (40) comprises a shift register with the same number of flip-flops as SPADs, an output of which is looped to an input which is initialized with the string of binary bits and then clocked every period.

7. The SPAD macro-cell according to any of the preceding claims, wherein the combination tree is a OR tree or XOR tree.

8. The SPAD macro-cell according to any of the preceding claims, wherein the time period is a laser pulse period.

9. A SPAD detector comprises at least one SPAD macro-cell according to any of the preceding claims.

10. The SPAD detector according to claim 9, wherein
the SPAD detector comprises a first SPAD macro-cell according to any of claims 1-8 and a second SPAD macro-cell according to any of claims 1-8;
SPADs in the first SPAD macro-cell present a first enable pattern at a time period, and SPADs in the second SPAD macro-cell present a second enable pattern which is different from the first enable pattern at the same time period.

11. A method for controlling sensitivity of a SPAD macro-cell comprising an array of SPAD units, wherein the SPAD macro-cell is divided to a plurality sub-cells, a combination tree to combine output signals from the SPAD units; and a time-to-digital converter (TDC) operably connected to an output of the combination tree;
**characterized in that**,
the method comprises enabling at least one or some SPAD units in each sub-cell at a time period; and
enabling another one or some other SPAD units in each sub-cell in the next time period;
wherein the method further comprises enabling a SPAD unit by turning on a buffer operably connected to the SPAD unit.

12. The method according to claim 11, wherein
the method further comprises:
storing in a register a string of binary bits, each of which represents a starting enable status of a SPAD;
performing a logical shift operation on the string of binary bits and control the buffers based on the shift operation through a barrel shifter.

13. The method according to claim 12, wherein
the method further comprises:
controlling the shift operation by a counter.

14. The method according to claim 13, wherein
the counter is driven by a reference clock which is the same as reference clock of TDC.

15. The method according to any of the precedent claim, wherein the method comprises determining a number of SPAD units to be enabled by two steps:
a) varying a real ambient event rate, Rra, at a detector and recording a measured ambient event rate, Rma, a pile-up factor Fpa due to the ambient illumination is then decided by Fpa = Rma/Rra;
b) calculating a real signal rate Rrs according to a measured signal rate Rms and the Pile-up factor Fpa.

16. The method according to claim 15, wherein
the method comprises comparing the real signal rate Rrs and a set limit to decide whether the number of SPAD units enabled in a laser pulse cycle is optimal.
